# EUROPEAN PATENT APPLICATION

(11) **EP 1 243 917 A1**
(43) Date of publication of application: **25.09.2002**
(21) Application number: 01660055.3
(22) Date of filing: 23.03.2001
(51) Int. Cl.: G01N 21/76

(54) **Nitric oxide analyzer**

(71) Applicant: INSTRUMENTARIUM CORPORATION, 00510 Helsinki (FI)
(72) Inventor: Weckström, Kurt, 02710 Espoo (FI)
(74) Representative: Laako, Tero Jussi

(57) **Abstract**

The invention concerns a chemiluminescent gas analyzer (1) for determining a concentration of a gaseous component (G1) in a sample gas mixture (2). The analyzer comprises a measuring chamber (3) having a reflective inner surface (27) and a transparent window (22). A substantial height portion of the reflective inner surface is composed of at least one convergent surface section tapering towards a bottom (35) of said chamber. The input conduits (23, 24) have at least one orifice within a bottom end region (45) of said chamber, said bottom end region being within the height portion for said convergent surface section(s). Further, there is an outlet (18) for removing said gases and possible chemical compounds from the chamber. The pressure (P) within the measuring chamber is at least 0.2 bar. A radiation sensitive detector (7) is directed to said window and said chamber for receiving radiation (E) emitted as a consequence of a reaction between the gaseous component and the gaseous reagent.

## Description

The invention relates to a chemiluminescent gas analyzer for determining a concentration of a gaseous component in a sample gas mixture, comprising: a measuring chamber defined by a reflective inner surface of a housing wall and by a transparent window; input conduits for delivering a gaseous reagent and said gas mixture into said chamber, and an outlet for removing said gases and possible chemical compounds thereof; at least a radiation sensitive detector directed to said window and said chamber and receiving radiation emitted as a consequence of a reaction between the gaseous component and the gaseous reagent. The invention also relates to a method for determining a concentration of nitric oxide in a sample gas mixture, the method comprising the steps: allowing gaseous ozone and said gas mixture to stream simultaneously into a measuring chamber and mix with each other under a pressure lower than the standard atmospheric pressure; detecting an intensity of radiation excited by chemiluminescent reaction between the ozone and the nitric oxide; removing said gases and possible chemical compounds thereof from said chamber.

Nitric oxide (= NO) can be measured in very small concentrations and with short response time using the chemiluminescence technique. Since nitric oxide was found to be a signal substance in the body of human beings or animals it has been more and more important to be able to reliably measure nitric oxide entering or exiting the body. Most often nitric oxide is measured in breathing gas either in connection with treatment of lung disease or during asthma diagnostics and as a measure of response to a treatment. The normal requirement for this purpose is a sensitivity of about 1 ppb - parts per billion (= 10⁻⁹) - and a response time of about 200 ms for a breath-by-breath recording. The concentration of nitric oxide in the exhaust gases from internal combustion engines is also one area in which the chemiluminescence technique is utilized, but in this case a considerably lower sensitivity in the ppm range - parts per million (= 10⁻⁶) - is sufficient, as for the measuring system of publication US-4 822 564.

Typical chemiluminescent gas analyzers are described in patents US-4 822 564 and US-6 099 480 as well as in publication Steffenson, Stedman: *Optimization of the Operating Parameters of Chemiluminescent Nitric Oxide Detectors -* ANALYTICAL CHEMISTRY, Vol. 46, No. 12. October 1974 (1704-1709). As with any luminescence reaction, also in this gas phase chemiluminescence the signal available is quenched by molecules of other gas components in the gas mixture measured. To minimize this harmful quenching of excitation, it is common practice to use very low pressure in the reactor chamber, where NO is reacting with ozone to form nitrogen dioxide in an excited state. The pressures in the reaction chambers are generally suggested to be below 0.01 bar. In the publications mentioned the pressure in the reaction chamber is suggested to be below 0.296 bar (0.3 atm), preferably below 0.0197 bar (0.02 atm), and at least lower than 0.17 bar (5 inches Hg), though pressures as low as about 0.0007 bar (5 mm Hg) are mentioned practical under conditions, when pressures up to 0.13 bar (98 torr) have been tested. The chemiluminescent reaction should take place within the reaction chamber so that all created light could be detected. For a sample flow of about 200 ml/min this means that the reaction chamber has to be quite big, often more than 100 cm³, and so according to the publications the smallest useful reactor has the volume of about 36 cm³, the optimum volume being about 300 cm³, whereupon the light collection has quite a low efficiency. So relatively high NO-concentrations, in the order of tens ppm, can generally be detected using the systems of the above-mentioned publications. Since the light level inside the reactor chamber is extremely low it is important to trap all ambient light, which is a difficult and expensive in a system with low pressure, especially on the outlet side, where the tube dimensions have to be big. The diameters mentioned are from 8 mm to 15 mm. It is also difficult to attain totally leak-proof construction in a low-pressure system. The gas inlets for the gas mixture to be analyzed and the carrier gas containing ozone are generally very near to the detector, as compared to the size of reactor chamber, and according to the above mentioned publications the gap between the inlets and the detector is only a fraction of the height of the chamber, e.g. 1/25 of the height and 0.5 mm, or about 1/10 of the height respectively, in an attempt to collect as much of the emitted light as possible. However, part of the reaction will always take place near the outlet and this light can be collected only with low efficiency. The cylindrical forms of the reaction chambers further decrease the light collection efficiency. Because of the close proximity of the input tube ends to the window, this window is easily coated with small particles of dirt flowing with the gas stream. As a result, the NO-analyzers on the market are bulky and expensive, and the vacuum pump is big and noisy and, in many cases, has to be placed outside the instrument housing.

The object of the present invention is to construct an inexpensive chemiluminescent gas analyzer and to attain a respective method for determining a concentration of a gaseous component in a sample gas mixture with sensitivity properties similar to or, if only possible, better than those of the expensive systems on the market but much less bulky and also less noisy.

The above-defined objects can be achieved by means of a gas analyzer according to the invention as defined in claim 1, and by means of a method according to the invention as defined in claim 17.

According to the invention by optimizing many parts of the measuring process at the same time as the vacuum requirement is reduced a measuring system having a sensitivity at least two decades higher than that of the prior art sensors under same pressure in the chamber and suitable also for measuring NO in ppb (10⁻⁹) range in respiratory gases is developed. The pressure requirements inside the measuring chamber are reduced to pressures at least 0.2 bar, preferably to about 0.4 to 0.5 bar. Simultaneously, this also has other positive influences on the construction. The reaction chamber can be made smaller, typically < 10 cm³, which means significantly increased light collection efficiency. By shaping the chamber properly according to the invention it is possible to increase signal level, too. The increased light collection efficiency of the inventive analyzer compensates for the more pronounced quenching effect present at the higher-pressure levels. It is even possible to use a smaller and less expensive detector. The construction of the chamber is also simpler because the entrance and exit ports can be located at the bottom of the chamber. The mixing of the sample gas and e.g. ozone still happens close enough to the window but without influence on the window. The used pressure level also reduces the requirements on hoses and joints by making leak problems less critical, and further enable use of smaller light traps and smaller pumps. Additionally, stray light reduction is easier to implement with suitable simple light traps at the inlets and outlet to the measuring chamber because of the smaller tube dimensions.

In order to further simplify the analyzer it is possible to directly use the sub-pressure for the input gas drier needed in the system. This does not add to the pump capacity and the sample pump can be very small, cheap and silent. It can easily be placed within the analyzer housing.

In all NO-analyzers there is a certain amount of quenching because of different gas components in the sample. Water has a strong influence but this can be avoided by using the drying system. Carbon dioxide on the normal 5% concentration level by volume in respiratory gas has a very small influence and does not normally need compensation. Anesthetic gases like nitrous oxide, halothane, enflurane, isoflurane, sevoflurane, and desflurane have slightly higher influence with higher pressure and in the rare cases when a compensation is needed it can be done mathematically using simultaneous information from infrared measurements. Of course, this also holds for carbon dioxide if complete compensation has to be achieved.

The invention is now described in detail with reference made to the accompanying drawings.

**Fig. 1** illustrates generally the chemiluminescent gas analyzer according to the present invention, in which the first embodiment of measuring chamber is shown in the longitudinal section thereof, and provided with a first type of detector and parallel input orifices.

**Fig. 2** shows graphically the dependence between the pressure in the measuring chamber and the signal concerning nitric oxide NO.

**Fig. 3A - 3F** illustrate different alternative forms for the reflective inner surfaces of the measuring chambers according to the present invention.

**Fig. 4** illustrates the measuring chamber according to Fig. 1, and provided with a second preferred type of detector.

**Fig. 5** illustrates the second embodiment of the measuring chamber according to the present invention in the longitudinal section thereof, and provided with a third type of detector and one input orifice.

**Fig. 6** illustrates the third embodiment of the measuring chamber according to the present invention in the longitudinal section thereof, and provided with coaxial input orifices with different lengths and the outlet coaxial with the input orifices.

**Fig. 7** illustrates the fourth embodiment of the measuring chamber according to the present invention in the longitudinal section thereof, and provided with input orifices extending transversally into the chamber and the outlet behind the input orifices.

**Fig. 8A - 8C** illustrate different alternative light traps to be used as the gas inlet to or gas outlet from the measuring chamber.

**Fig. 9** illustrates schematically the system for compensating the influence of quenching by using the information from an additional gas sensor.

**Fig. 10** shows the dimensions for the bottom end region according to the invention.

**Fig. 11** illustrates in section a typical measuring chamber according to prior art.

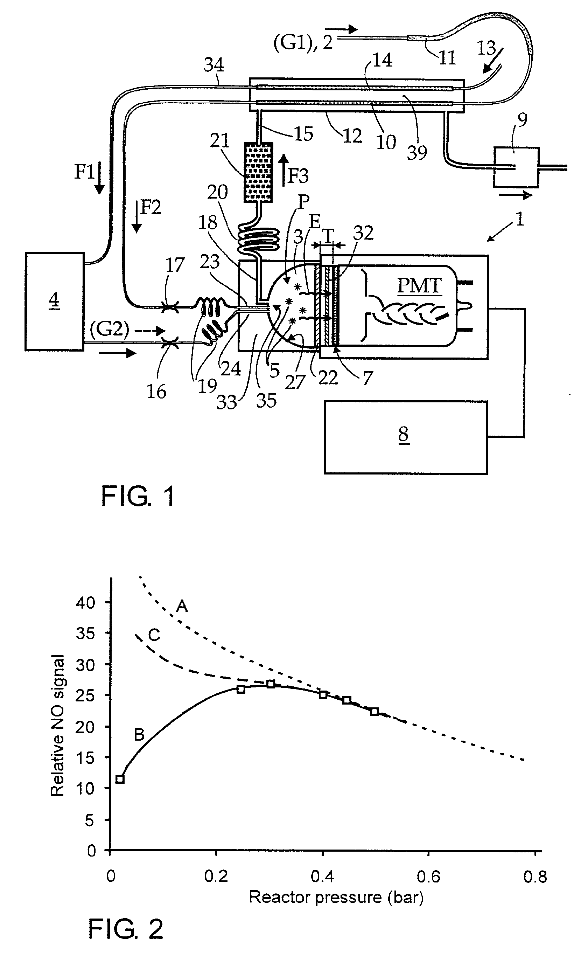

With reference to Fig. 1 the main parts of a chemiluminescent gas analyzer 1 for determining the concentration of a gaseous component G1 in a sample gas mixture 2 is described below. For simplicity the description to follow is mainly concerning measurement of nitric oxide G1 = NO in a gas mixture 2 like breathing air to or from a human being or animal, and using ozone O₃ as a gaseous reagent G2. It shall be kept in mind that this does not intend any limitation, but the invention concerns analyzing the concentration of any gaseous component G1 in any kind of sample gas mixture 2, the gaseous reagent G2 together with the gaseous component G1 performing a chemiluminescent reaction. Gas phase chemiluminescent reactions occur also between ethylene and ozone, between carbon monoxide CO and atomic oxygen and between dimethylsulfid and fluorine F₂ forming hydrogen fluoride HF in excited state, etc. The chemiluminescent reaction is arranged to occur in a measuring chamber 3 defined by a reflective inner surface 27 of a housing wall 33 and by a transparent window 22. The sample gas 2 containing NO is drawn or delivering into the measuring chamber 3 where it reacts with ozone O₃ from an ozone generator or ozonizer 4. In the reaction NO₂ is formed in an excited state of the electron shell. Part of the electrons in the excited states return to their ground state by emitting photons, that is radiation E, within the wavelength region between 600 nm and 3000 nm. The radiating emission process is indicated as small stars 5 in the measuring chamber 3 for reaction. Input conduits 23 and 24 are connected to the measuring chamber for delivering the sample gas 2 including the gaseous component G1 like nitric oxide and the gaseous reagent G2 like ozone into the measuring chamber in order to attain the chemiluminescent reaction therein. An outlet 18 is also connected to the measuring chamber for removing said gases 2, G2 and possible chemical compounds thereof from the measuring chamber.

An amount of the excited radiation E is collected at a sensitive area A2 of a radiation sensitive detector 7 directed to said window and to the interior or volume V of said chamber, and it receives radiation E emitted as a consequence of a reaction between the gaseous component G1 and the gaseous reagent G2. For fast and highly sensitive NO-analyzers photomultiplier tubes PMT are still the best choice for radiation sensitive detector. Sensitivity of the photomultiplier tubes can be based on multialkaline materials, like Na-K-Sb-Cs type or Sb-K-Cs type or Sb-Rb-Cs type, or some other material like Ag-O-Cs etc. Even if the photomultiplier tube PMT is the best choice for the applications requiring most sensitiveness it is possible to use various solid-state photosensors, like a photo-charge-mode device PCD, or an avalanche photodiode or avalanche phototransistor device APD, as the radiation sensitive detector 7. A large area detector having an active area A2 approaching the area A 1 of the transparent window 22 is most efficient but also most expensive. It is possible to use a detector having a smaller area with slightly reduced collection efficiency. Photo-charge-mode devices PCD can be of the low noise type normally applied in astronomy, e.g. a CCD (Charge Coupled Device), preferably a so called MPP-CCD (Multi Pin Phased CCD) having a noise level of only about 1/100 as compared to the noise level of ordinary CCD, or a CMOS (Complementary Metal-Oxide Semiconductor), or a BiCMOS or a MESFET (Metal Semiconductor Field Effect Transistor), or a HEMT (High Electron Mobility Transistor) readout circuitry, all of which stores the photon-created electrons as a charge. In the readout phase all pixels are binned to one big pixel and the result is almost comparable to that of a normal photomultiplier tube but with less space needed and without high voltage. Avalanche photodiode or avalanche phototransistor devices APD act in a way like photomultiplier tubes, whereupon the photon-created electrons liberate additional electrons. However, better cooling will be needed for these solid-state photodetectors than for photomultiplier tubes. Sensitivity of the solid-state photodetectors can be based on silicon, germanium, indium-gallium-arsenide or some other material. Photon counting is normally applied to reduce the noise level and detector cooling is advantageous for the same reason. The photon pulses are counted and the analyzer calibrated to show nitric oxide NO concentration in a conventional electronic unit 8 of the instrument performing the necessary calculations. As long as enough ozone is provided for the reaction or, alternatively, the ozone concentration is kept at a constant level, the produced signal will be a linear function of the NO concentration. At very high counting rates the detector may gradually be saturated because of an increasing dead time, but this does not happen at ppb levels of NO mainly considered in this invention.

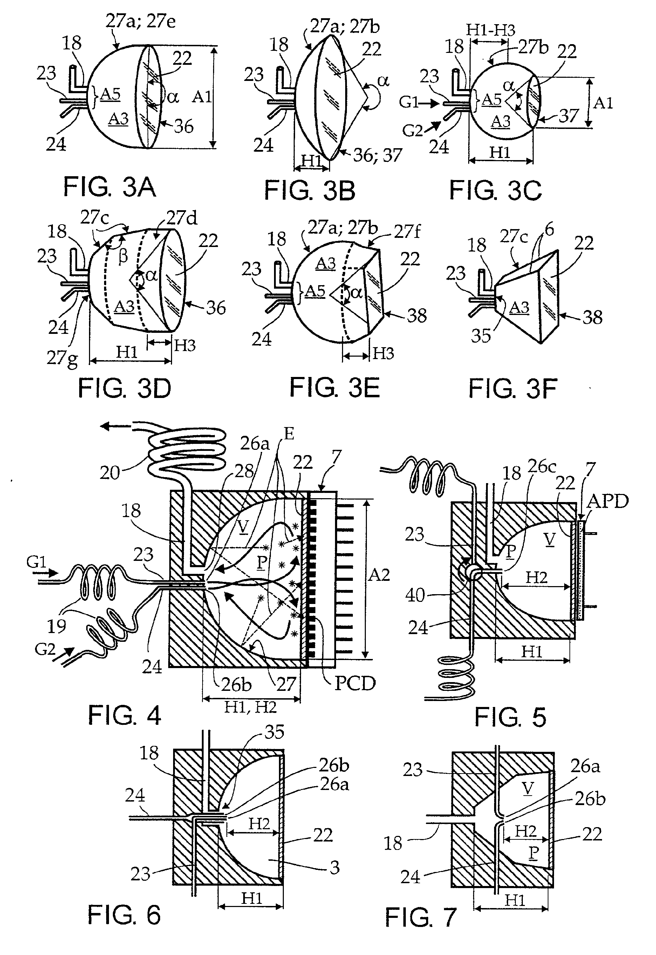

According to the invention the reflective inner surface 27 of the measuring chamber 3 is substantially or mainly composed of convergent surface sections each having preferably also a substantially concave configuration, discussed more in detail later, extending in direction from said transparent window 22 towards a bottom 35 of the chamber. More in detail, a substantial height portion H1-H3 of the reflective inner surface 27 is composed of at least one convergent surface section 27a and/or 27e and/or 27b and/or 27c tapering towards the bottom 35 of said chamber. The bottom 35 of the measuring chamber is at a point of the inner surface 27 far off from the window, preferably at the furthest point or end of the chamber as seen in the direction of a normal to the window, and the measuring chamber 3 has a total height H1 between the bottom 35 and the window 22. Those possible sections 27d, 27f, and the right hand side of sphere from its center of the inner surface not convergently tapering towards the bottom 35, i.e. cylindrical or parallelepipedous or any surface form tapering wholly or partly towards the window, have an adaptive height H3. So the convergent surface section(s) has, as the mathematical expression, the height portion H1-H3 being efficiently light collecting. Convergence of the surface sections 27a, 27e, 27b, 27c means that the successive cross-sectional areas of the reflective inner surface 27 are continuously decreasing in direction towards the bottom 35, when the cross-sections are formed by planes parallel to the window 22. Preferably the number of these planes can increase limitless. Further according to the invention, the input conduits 23, 24 have at least one orifice 26a, 26b; 26c within a bottom end region 45 of the measuring chamber which region is opposite to said window. The bottom end region 45 is within the height portion H1-H3 for said convergent surface section(s). The bottom end region 45 is defined to be that volume or region delimited by a plane 44 parallel to the window 22 and going through the orifices 26a and 26b, or through the orifice 26c, or through at least that of the orifices - e.g. 26a as in Fig. 6 - which is nearest to the window, and by the projective periphery towards the bottom 35 as well as by that bottom part A6 of the inner surface limited by the projection of the area A5. The area A5 of the bottom end region 45 is at that plane 44 mentioned just above, and said projection is in the direction perpendicular to the window 22. So the orifices are within said bottom end region 45. The described area A5 is substantially smaller than the area A1 of the window 22 or area A2 of the detector 7, or is smaller than 50% of the window or detector area A1 or A2, as discussed later. Both the sample gas 2 and the ozone O₃ contained in the air coming from the ozonizer stream either simultaneously or successively into the measuring chamber 3 and mix in the chamber with each other under a pressure P, which is lower than the standard atmospheric pressure but at least 0.2 bar during radiation detection by said detector 7. During this mixing the chemiluminescent reaction between the ozone and the nitric oxide is occurring and radiation E excited. This preferred method will be described in greater detail later. Also the outlet 18 opening 28 is preferably within the bottom end region 45 of the chamber 3 according to this invention for removing the gases and the possible chemical compounds from the chamber.

Both input conduits 23 and 24 are fitted with light trap tubes 19 and the outlet 18 has its own light trap tube 20 of slightly larger dimension in order not to restrict the flow to the vacuum pump 9. A scavenger and if necessary a scrubber 21 removes the unused ozone O₃ and the nitrogen dioxide NO₂ from the flow F3 of the exit gases 15 so that the reactive nature of ozone does not interfere with the structures of the pump 9 or cause harm to the environment, and so that the poisonous nitrogen dioxide does not cause harm to the environment. Activated carbon can be used for this purpose. It is understandable that also other type of filters can be used in this analyzer even if they are not included in Fig. 1. The input gases, i.e. air into the ozonizer 4 and the sample gas mixture 2, can be pre-filtered to remove dust, water and mucus, and at the output there can be a filter absorbing the produced nitrogen dioxide.

The curves in Fig. 2 show the basis for construction of the NO-analyzer according to this invention. According to established theory, the lower the pressure is in the measuring chamber 3 the better the signal will be because of reduced quenching. The dotted curve *A* shows the relative NO signal as a function of pressure P in the measuring chamber. However, this curve assumes equal light collection efficiency for all pressures. The flow inside the measuring chamber 3 will grow as the pressure is reduced and, as a consequence, a larger and larger measuring chamber will be needed to contain the reaction totally while it lasts. The reaction time is only about 10 ms but the mixing time can be much longer and at a pressure of less than 0.05 bar the chamber volume must typically be more than 100 cm³, as in the prior art publications, to avoid the continuation of mixing and chemiluminescent reaction in the outlet tube outside the chamber. According to the invention the volume V of the measuring chamber 3 can be less than 10 cm³ for pressures P above 0.2 bar within the chamber 3. Measurements have shown that volume V of 2.4 cm³ is optimal at pressure P of 0.5 bar. It is much easier to collect the chemiluminescent light from a small chamber than from a large one. Curve *B* in Fig. 2 shows measured NO signal values at different measuring chamber pressures using a chamber volume V ranging between 2.4 and 4.8 cm³. The measuring chamber has an optimum pressure P of at least 0.3 bar or over 0.3 bar and below 0.6 bar, but somewhat lower pressure P down to 0.2 can be used as well as somewhat higher pressures like 0.7 bar at maximum, or even up to 0.9 bar. Above that optimum the reaction starts being quenched because of the pressure and below the optimum pressure the chamber volume is too high, and the unfinished reaction is flushed out before detection. It is estimated that the dashed curve *C* represents the situation where the chamber volume is optimally chosen and the light collection as good as it in practice can be. As noticed the curve *C* is fairly flat and independent of pressure P for a large pressure range above 0.2 bar. Below that pressure the curve rises slightly but using low pressures means that the pump 9 has to be more big, bulky, noisy and expensive. In general, volumes V smaller than 10 cm³ but larger than 1.2 cm³ can be used, and preferably the volume V is between 5 cm³ and 2 cm³. Therefore, according to this invention it is preferable to use measuring chamber pressures higher than 0.2 bar, preferably at least 0.4 bar, or in the range between 04 bar and 0.5 bar. All the other features and benefits described in this invention are also based on the fact that pressures above 0.2 bar are used. Altogether a small, inexpensive and very sensitive NO-analyzer results.

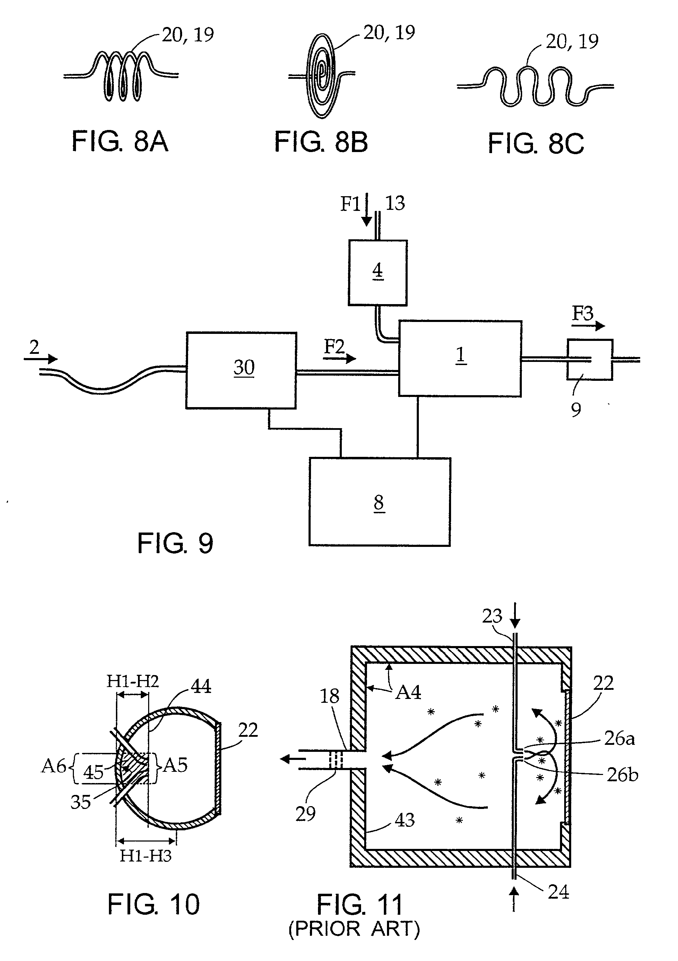

As a comparison a typical reactor chamber according to prior art is shown in Fig. 11, in which the chamber is big as compared to the dimension of the window or detector area, the inlets for sample gas and ozone containing carrier gas, like air, open into the chamber very close to the window as mentioned earlier. This window is either used as a filter for passing light above 620 nm only, or a separate long pass filter is mounted between the window and the detector. The reason for this is that disturbing fluorescence because of a reaction between ozone and dirt may increase the signal background or cause signal drift. It is obvious that the large volume with subsequent large inner wall area and the very exposed window will increase possible influence from this unwanted fluorescence. As can be understood from Fig. 11 gathering all of the excited radiation from this large sized chamber is not very efficient. In the prior art with high vacuum even small leaks have immediate influence on the signal and metallic connections and tubes are widely used. The outlet can be connected using a flexible metal hose or it can have a louver 29 as shown in Fig. 11 for trapping the ambient light.

The main benefits from using measuring chamber 3 with internal pressures P at least or higher than 0.2 bar are related to the chamber itself, its construction and the components attached thereto. With pressure according to the invention it is possible to optimize the measuring chamber 3 so that it has as small an inner area of the reflective inner surface 27 as possible for the volume V of the chamber 3 and the active area A2 of the detector 7. Also it is beneficial if the main part of the light either hits the active area A2 of the detector 7 directly, i.e. without any reflection, or after only one reflection from the wall surface 27. In other words, the excited radiation E is collected for detection so that a substantial portion of that radiation not directly hitting the active area of detector 7 is allowed to reflect once only before hitting said active area. One must also consider the distance T between the window 22 and the detector sensitive area 7. This distance is part of the detector package or it can be a separate insulating spacer with windows. Anyway, it will reduce the light collection efficiency in most cases, and so the active area A2 of the detector shall be so close to the window 22 as possible. Accordingly it is preferred that the window 22 constitutes the optical filter, i.e. the window is the filter 22, between the measuring chamber and said radiation sensitive detector in case such an optical filter is used in the analyzer 1. If practical a separate filter 32 between said window and the detector can be used. The optical filter 22, 32 is a long pass filter when it is transparent to radiation having wavelengths over a specified wavelength limit, a short pass filter when it is transparent to radiation having wavelengths under a specified wavelength limit, and band pass filter when it is transparent to radiation having wavelengths between two specified wavelength limits. In case NO reacting with ozone O₃ is measured, an optical long pass filter having transparence over about 620 nm can be used, but for measuring other kind of reactions an optical long pass filter with a different transparence or an optical short pass filter or an optical band pass filter may be utilized. The optical filter 22 or 32 is generally incorporated in cases there is a need to eliminate surplus excited radiation - i.e. interfering radiation like fluorescent radiation - caused by reactions other than that from the chemiluminescent reaction to be measured. If there is no risk for interfering radiation, it is not preferred to incorporate an optical filter, and at least any additional optical filter 32 shall then be avoided. Contact between the detector 7 and the window 22 is possible, but if the detector 7 is cooled for lower noise, a distance T should be arranged between the detector and the window/filter, the distance T being preferably smaller than 0.5 mm.

The optimal shape of the measuring chamber 3, i.e. the convergent form of the reflective inner surface 27, provided by surface section 27a and/or 27e and/or 27b and/or 27c, against or towards said chamber 3 for efficient light collection is close to spherical. The light emitted from a reaction anywhere within the chamber volume V is then always efficiently transferred to the detector 7 with a minimal amount of reflections and almost without hitting the walls within the distance T. Typical shapes are shown in Figs. 3A - 3F depending on the detector and window size used. Fig. 1 and 4 illustrates one of the optimized measuring chambers, the half sphere of Fig. 3A. So in general terms the reflective inner surface 27 is preferably substantially a smaller or larger part of a sphere 27a. The exact shape is not very critical and can have a small cylindrical part 27d or prismatic part 27f near the window. The reflective inner surface 27 can be parabolic, i.e. part of a paraboloid 27e, or elliptical, i.e. a part of an ellipsoid 27b, or frustoconical, i.e. parts of truncated cones 27c in longitudinal section thereof. The reflective inner surface 27 can also be a combination of two or several of these convergent surface section 27a, 27e, 27b, 27c together with additional concave surface sections 27b, 27d, 27f described. A concave surface section is any surface being concave at least in one section of the surface, and so standard conical and cylindrical surfaces are concave in the section perpendicular to their axis line, but spherical, paraboloidal and elliptic surfaces are concave in respect to any sections thereof. The spherical, paraboloidal and elliptic surfaces and surface sections as well as any conical surfaces and surface sections are also convergent because they are able to connect the larger window 22 to the smaller bottom 35 as the inner wall surface of the chamber 3 without pronounced corners. This mentioned property means that the form of the reflective inner surface in its longitudinal section is either a continuous and smooth concave curve, which is preferred, or a combination of successive lines or concave and smooth curves the angle (3 between these successive lines/curves - i.e. tangents of the curves at the point of the corner - being at least 120°, or preferably at least 135°, or typically between 145° - 165°. This angle (3 is applicable only to corners including to convergent surface sections, as in Fig. 3D, but not to corners between sections forming the adaptive height H3 or section around the bottom 35, e.g. planar section 27g, and a neighboring convergent surface section. The reflective inner surface 27 shall be for the main part convergent, and shall comprise at least one spherical surface section 27a and/or one parabolic surface section 27e and/or one elliptical surface section 27b surface section(s), which constitute the above said concave and smooth curves in the longitudinal section thereof, and/or one frustoconical surface section 27c, which constitute the above said lines or concave and smooth curves in the longitudinal section thereof. All of these are also surface sections converging from the segmental circle 36 or ellipse 37 or polygon 38 forming the border of the window 22 towards the bottom 35. In case the reflective inner surface 27 does not include spherical, parabolic or elliptical sections it shall preferably comprise two conical surfaces sections, as shown in Fig. 3D, but may also comprise more than two conical surface sections 27c. In the last mentioned case it is advantageous that the frustoconical surface sections 27c are arranged so as to be tangents to a spherical or parabolic or elliptic surface thought inside the reflective inner surface 27. The conical surface section 27c may have any form in transversal sections parallel to the window, like a circle, as in Fig. 3D, or a square or rectangle, as in Fig. 3F, or a triangle or any other polygon, whereupon the segmental figure approaches a circle or an ellipse when increasing the number of corners limitless. The edges 6 or the respective contour lines of the conical surfaces 27c can be direct lines or alternatively concave or convex curves. It shall be noticed that for the purpose of the invention a wider than normal definition for cones is used → conical surface is generated by any curve moving through a fixed point and along any curve in a plane. Further the reflective inner surface can have a form generated by flattening any of the form initially having any form described above. In the preferred alternative orifices 26a, 26b; 26c open, or the input conduits 23, 24 protrude, and respectively the outlet 18 open or protrude into the chamber volume V at or proximate to the bottom 35, or at least within the bottom end region 45, as shown in Figs. 1 and 3A to 6. In cases of Figs. 4 to 6 the orifices and the outlet open into the chamber volume within the bottom part A6. It is also possible to introduce the input conduits 23, 24 through other areas of the inner reflective surface 27 if only the orifices 26a, 26b; 26c are positioned to open into the volume within the bottom end region 45, as shown in Fig. 7, whereupon the outlet opening is behind the orifices as seen from the window. The bottom part A6 at and around the bottom 35 can be planar surface section 27g, or have save form as the other surface sections, or have a form deviating from those mentioned, but the surface area of this bottom part A6 is anyway substantially smaller than the area A1 of the window and the area A2 of the detector 7, respective to the area A5 of the bottom end region 45. In general the bottom part A6 is smaller than 50%, or smaller than 30%, or preferably smaller than 20% of the window or detector area A1, A2. Typically the bottom surface area A6 behaves analogically to the end region area A5, but have slightly higher percentage value. The orifices of the input conduits can be positioned in one point within the bottom end region 45 or divided, in case both of the input conduits are provided with several orifices, over the area A5 or over the volume of the bottom end region 45. The window 22 crops the inner surface as a segment, and the window has such a position in respect to the inner surface 27 that a central angle α between the opposing radii of the segmental circle 36 or ellipse 37 or polygon 38 is formed, whereupon the focal point of the reflective inner surface 27 or the weighted point calculated by the root-mean-square method from the minimum distances between the normals to the reflective inner surface 27 is considered as the center of these radii. The chamber can be machined from e.g. aluminum and polished inside. It is also beneficial to coat the reflective inner surface 27 with a highly reflecting and chemically resistive coating like gold.

The ratio A3/A4 between the area A3 of the reflective inner surface 27 of the converging inner reflective surface 27 of the measuring chamber 3 according to the invention and the surface area A4 of a cylindrical chamber with a planar bottom 43 according to the prior art, as shown in Fig. 11, with identical inner volume and window area A1, which is a hypothetical construction, as those of the invention can easily be calculated and shown to be < 1. The ratio A3/A4 describes the concavity Φ of the inventive shape of the reflective inner surface 27, i.e. Φ = A3/A4, so that the lower the ratio value the more continuous and more reflectively effective is the inner surface 27 of the chamber 3. Concerning various spherical shapes, the ratio A3/A4 is only 0.38 for a chamber with the central angle α= 30°. It has a maximum of 0.898 at α= 127°. For the half sphere, α= 180°, the ratio A3/A4 = 0.86. When going to shallower chamber solutions the ratio decreases only slightly. At the central angle α= 270° it is e.g. 0.815. If a cylindrical section 27d is added as a connection between the spherical surface and the window the ratio A3/A4 will increase slightly. For the adaptive height H3 of a cylindrical section next to the window equal to half of the height of the spherical part, meaning one third of the total height H1, the maximum ratio Φ = A3/A4 mentioned above increases to about 0.93. If H3 is half the total height H1 this maximum ratio Φ will be about 0.94. Larger values of the height H3, including the distance T, cannot be considered collection efficient because an increasing number of multiple reflections from the walls are needed to collect the radiation from the chemiluminescent reaction. It shall be noticed that a difference 0.01 in the value of A3/A4-ratio causes a considerable change in the visual appearance of the inner reflective surface 27. Accordingly, as a mathematical expression, the height portion H1-H3 of the measuring chamber, the heights H1, H2, H3 being perpendicular to the window 22 and active area of the detector 7, including specifically the convergent surface sections 27a and/or 27e and/or 27b and/or 27c, without the non-convergent surface sections 27d and/or 27f, is at least 50% and preferably at least 70% and typically at least 80% of the total height H1 of the measuring chamber 3. In fact the shading effect of the protruding inlet tubes within the chamber of the prior art, which lowers the efficiency, should have been included in the calculations, but it is omitted because of complicated calculations.

In order to verify the significance of the shape of the reflective surfaces in the measuring chamber a non-sequential ray tracing analysis has been performed comparing a chamber shape of a half sphere and a chamber shape of a corresponding hypothetical cylinder with equal volume and window area. Even if no exact optical imaging is important in this case, the source being extended to more or less the complete volume V of the measuring chamber, the shape of the chamber walls do have an influence on the directions of the reflected rays. This is important especially if the distance T between the window and the detector is long and non-reflective. In photomultiplier tubes this distance, mounting included, can easily be 10% of the detector diameter.

It is important to try to minimize the amount of reflections that a ray undergoes before hitting the detector 7. This is even more important if the reflectivity of the chamber walls decreases as a consequence of dirt and corrosion. For all rays emitted in the hemisphere directed away from the detector one reflection is imperative in order to change the direction but already a second reflection starts to increase the losses in the signal. In the case of a half sphere 52% of all these rays are turned towards the detector after one reflection. The corresponding number for the cylindrical reflective surface with planar bottom of the prior art is only 24%. After one or two reflections the numbers were 77% and 60%, respectively. The distance T in this case was only 1 % of the diameter of the detector. If any number of reflections is allowed and the wall reflectivity is 0.9 the half sphere gives 12% more total signal than the cylinder. The surface area difference would indicate an increase of about 14%. The numbers do not match since a large amount of the radiation hits the detector directly independently of the surface shape. If only the hemisphere directed away from the detector is considered the increase would be 17% so there is clearly a shape factor involved, too. If the distance T is increased to 10% of the diameter of the window the half sphere gives 22% more total signal than the cylinder. This indicates clearly that the shape of the reflective surface is important.

Rays emitted from different parts of the measuring chamber are not collected with the same efficiency. Normally, it is important that rays emitted near the central parts of the window are well collected. This was also tested for the half sphere and the corresponding cylindrical surface. Regarding rays emitted in a hemisphere in directions away from the detector the bottom part A6 was twice as efficient as the window area for the cylinder. The opposite was true for the half sphere. The bottom part A6 redirected only half the amount of rays compared with the window area A1. This is actually beneficial since the input orifices 26a, 26b, and 26c and the opening 28 of the outlet 18 are located in this area. Considering the total emission returned to the detector 7 either directly or after one reflection the collection efficiency for the half sphere is about 50% higher within the window area compared to the bottom part A6.

The chamber dimensions are sufficiently small to have both input conduit ends or orifices 26a, 26b; 26c at or very close to the chamber bottom 35. The sample gas mixture 2 and the carrier gas containing ozone O₃ enter close to each other and with a high speed, which is however lower than sonic speed, and are efficiently mixed in the volume V of the reaction/measuring chamber 3. The speeds of the sample gas mixture and the carrier gas containing ozone are typically not higher than 200 m/s but not lower than 5 m/s, and preferably between 10 m/s and 100 m/s. After that the flow of the mixed gases and their chemical compounds - in this case NO₂ - turns back towards the outlet 18, which further enhances the mixing process since this outlet preferably also is at the bottom end region 45 of the chamber. However, the outlet opening 28 does not necessarily have to be close to the input conduits within the bottom 35 area. Anyway the outlet should not be positioned along the sides of the chamber. The input conduit orifices 26a, 26b; 26c so are close together in order to make the mixing fast and efficient enough. The input orifices 26a, 26b can be side-by-side as in Fig. 4, or they can be concentric or coaxial, the ozone input conduit 24 around the sample input conduit 23 as in Fig. 6, within said bottom end region for simultaneous delivery of said gaseous reagent and said sample gas mixture. The input conduits can also have a longer and a shorter protruding length into the chamber, as shown in Fig. 6. The flow direction from the orifices 26a, 26b can be parallel or can form an angle therebetween, as shown in Figs. 7 and 10. In any case the flow directions from the input orifices are generally or substantially away from outlet opening 28. Both input conduits can also be divided in a plurality of orifices and mechanically mixed at the bottom end region of the chamber, but the area used for the input orifices has to be within the bottom part A6 or bottom end region 45. Mechanically, the configuration shown in Figs. 1 and 4 is the easiest to construct and also works with satisfaction. It is also possible that the analyzer comprises a flow selection unit 40 like a selective rotary valve for successive delivery of ozone and the sample gas mixture through a single orifice 26c, as shown in Fig. 5. The distance H2 between the window 22 and the two or several orifices 26a, 26b or that orifice 26a nearest to the window or the single orifice 26c constitutes a substantial proportion of the height H1 of said chamber. The distance H2 is at least 50%, or preferably at least 80% of the height H1 of said chamber, or approaching the height H1 of the measuring chamber 3. Independent of the type of the convergent surface section(s) or the type of orifice(s) the bottom height, as a mathematical expression, H1-H2 between the bottom 35 and the orifice nearest to the window or the orifices, i.e. the maximum height of the bottom end region 45, is at maximum equal with the height portion H1-H3 disclosed earlier in this text. Accordingly said the one orifice, two orifices or several orifices respectively is/are within the height portion of said convergent surface section(s). This bottom height H1-H2 is also smaller than the height portion H1-H3. As mentioned the outlet 18 is also within said bottom end region 45 or within the bottom part A6 opposite to said window. The outlet opening 28 either surrounds the orifice(s) 26a, 26b; 26c or is preferably side-by-side with the orifice(s) 26a, 26b; 26c. Preferably the distance of the outlet opening 28 from the window is greater than said distance H2 of the orifices, which means that the opening 28 for the outlet 18 is further away from the window 22 than the inlet orifice(s) 26a, 26b; 26c. The distance of the outlet opening from the window can be equal with the height H1 of the chamber.

As mentioned before, the light level within the reaction chamber 3 is very low. For NO concentrations at the ppb level the light is in the fW (femtowatt = 10⁻¹⁵W) range and only tens of photons are counted each second. Then it is of outmost importance to protect the chamber volume and detector from ambient light. Light can easily enter through the input conduits 23 and 24 or outlet 18 if no light traps are provided. With vacuum above 0.2 bar the tubes can have fairly small dimensions even at the outlet. Plastic tubes of suitable material such as polytetrafluorethylene can easily be used because possible small leaks are not critical. An inner diameter of about 2 mm is big enough and does not introduce any noticeable flow resistance. The light trap is then easy to make from a metallic tube by shaping it as a helical coil like the light trap tubes 19 for the input conduits 23, 24 and light trap tube 20 connected to the outlet 18, as shown in Figs. 1, 4 and 8A. The coil can also be differently shaped e.g. like a cone. A spiral shape as shown in Fig. 8B and a winding shape or a shape having successive bends as shown in Fig. 8C can also be used. The main thing is that there are a number of turns or bends that through successive reflections and material absorption gradually extinguish the entering light. For a helical coil with radius R made of a tube with inner diameter *d* the amount of reflections per turn N is approximately N = 2·π·(R/*d*)^{½} in a symmetrical case. For R = 3 mm and *d* = 0.5 mm this gives 15 reflections per one turn. With a reasonable reflectivity of 0.5 already four turns give the extinction factor 0.5⁶⁰ = 8.7·10⁻¹⁹, which in a normal instrument construction is far below the noise level of the analyzer.

A sample pump 9 is used to provide a suitable sample gas flow F2 to the measuring chamber 3, carrier gas flow F1 through the ozonizer 4 into the measuring chamber 3 and exit gas 15 flow F3 out of the measuring chamber 3. The ozone O₃ generator or ozonizer 4 is arranged in a feeding conduit 34 for the gaseous reagent G2, like air with ozone, between a second hygroscopic ion exchange tube 14 and the input conduit 24 leading into the measuring chamber. The pump 9 is connected to suck the gases from the measuring chamber and through the scavenger 21 as well as through demoisturizing unit or drier 12 described later in this text. Since the volume V of the measuring chamber 3 is small rendering also small existing gas flows F1, F2, F3 which are utilized also for the drier 12 and a predrier 11, the pump capacity can be kept at a low level and the pump 9 can be small, inexpensive and silent. A small diaphragm pump is preferable, but small piston or rotary vane pumps are also usable.

As earlier mentioned quenching from different gas components in the sample gas mixture 2 can influence the measuring result, the quenching meaning collisions between the excited NO₂ molecules and mainly other polar molecules in the sample gas mixture. Quenching is slightly more pronounced at higher pressures P of the measuring chamber 3 but the effect may be insignificant depending on the application. For respiratory gases carbon dioxide CO₂ is the main reason for noticeable quenching. However, since the concentration level of exhaled CO₂ normally is at most about 5% by volume the influence will be only about 1.5% of the NO reading. This can be corrected mathematically if needed because exhaled air always contains about the same mentioned amount of carbon dioxide. In the same way the effects of any other disturbing gas component(s) may be eliminated if its/their concentration(s) are constant enough. In medical applications also water, which has a very strong quenching effect, and possibly different anesthetic gases respiratory air has to be considered.

Concerning water H₂O, in gaseous form, it is necessary - because of the quenching effected by it - to dry the sample gas mixture 2 before it enters the measuring/reactor chamber 3. The simplest way to do this is to use a hygroscopic ion exchange tubes manufactured e.g. by Perma Pure Products, Inc. of Toms River, N.J. under the name "Nafion". When gas is flowing through such a hygroscopic ion exchange tube the partial pressure of water will equalize on both sides of its walls. Thus, in the pre-drying third hygroscopic ion exchange tube 11 the saturated respiratory gas sample 2, G1 is predemoisturized so that its water partial pressure reduces to that of the ambient conditions around the third hygroscopic ion exchange tube 11. This third hygroscopic ion exchange tube 11 is in series with and in flow direction F2 prior to a first hygroscopic ion exchange tube 10 to be discussed next. The room inside the drier 12 is connected to flow F3 of the exit gas 15 including the sample gases already measured from the measuring chamber 3, whereupon there is the same vacuum or pressure P lower than standard atmospheric pressure produced by pump 9 as in the measuring chamber 3. This exit gas 15 has a reduced water partial pressure relative to its lower pressure from its original pressure, which latter is generally same or near the standard atmospheric pressure, and further the exit gas are the same gases fed as flows F2 and F1 through the input side of a first hygroscopic ion exchange tube 10 and a second hygroscopic ion exchange tube 14 respectively within the drier 12 and so demoisturized and predemoisturized reducing the water partial pressure in the input gas flows F1, F2 to the same level as the exit gas 15 flow F3. The first exchange tube 10 is positioned in the input conduit 23, and the outlet 18 from said measuring chamber is in counter flow F1, F2 ⇔ F3 - because input flows F1, F2 are opposite to the exit flow F3 - communication with exhaust sides 39 of the first exchange tube 10. The original partial pressure of water may at start-up have been the same as that of the ambient air, but since the already dried sample gas 2 is redirected through the exhaust sides 39 of the drier 12 outside of the exchange tubes 10, 14 further successive drying will take place and as a result the water content is so low that it does not disturb the measuring process. The dryer 12 according to the invention is preferably constructed also to dry the carrier gas 13, i.e. the air flowing to the ozone generator 4 by utilizing the second hygroscopic ion exchange tube 14, which second exchange tube 14 is in the feeding conduit 34 for the gaseous reagent G2 like carrier gas for ozone. In this case, too, the outlet 18 from said measuring chamber is in counter flow F1, F2 ⇔ F3 communication with exhaust sides 39 of the exchange tubes 10, 14, whereupon drying of the air 13 will take place and as a result the water content is so low that it does not disturb the measuring process or ozone production. For the disclosed purpose both hygroscopic ion exchange tubes 10 and 14 are enclosed either in the same outer tube or in separate tubes connected parallel to each other. This is a very efficient, simple and inexpensive way to reduce the influence of water to a negligent level prior to feeding air 13 and the breathing gas 2 into the ozonizer and feeding into measuring chamber respectively. Depending on the gas components in question it can be possible to remove materially one or some of the disturbing ones other than water, too.

In other cases where a disturbing gas component with a variable concentration cannot be materially removed from the carrier gas 13 and/or form the sample gas mixture 2, as described above, an arrangement like the one illustrated in Fig. 9 can be used. The analyzer combination then further comprises an additional analyzer 30 like an infrared analyzer connected in series with and in the flow direction F2 of the sample gas mixture 2 prior to the chemiluminescent gas analyzer 1 for determining the concentration of those gas components in the gas mixture 2 quenching the chemiluminescent reaction between the gaseous component G1 to be measured, like nitric oxide NO and the gaseous reagent G2, like ozone O₃. In this way the concentration of the disturbing gas component or components can measured and their effect may be eliminated by calculations when applied simultaneously with the described chemiluminescent determining of the concentration of the gaseous component G1, like nitric oxide NO. The information from such an analyzer 30 can be used in electronic unit 8 to correct for the quenching effect. In cases of anesthesia the breathing air/gas 2 may also contain nitrous oxide N₂O and anesthetic agents. Their influence can be more pronounced. As an example, NO measured in a mixture containing 30% by volume of nitrous oxide N₂O will need a correction factor of about 1.2 and 6% by volume of desflurane a correction factor of 1.28. If both gases are present in the same sample gas mixture 2 the quenching will be roughly additive. The other used anesthetic agents halothane, enflurane, isoflurane, and sevoflurane have similar influence but since they are used in lower concentrations their influence on the NO reading will normally be less than 10%. This quenching by anesthetic gases is also notable with NO analyzers using pressures below 0.2 bar and would normally require compensation. So by determining the contents of nitrous oxide N₂O and anesthetic agents in the breathing gas by utilizing absorption of infrared radiation the concentration of nitric oxide NO detected is corrected with calculations having at least said contents of nitrous oxide and anesthetic agents as a data. The additional analyzer 30 can be of any known or new type, and the electronic unit 8 for calculating the concentration of the gaseous component G1 and for calculating the corrections required by the disturbing gas components or other disturbing data can be of any known or new type, and so they are not described in detail.

The flow F1 of air 13 through the ozone generator 4 is controlled by flow resistance 16 and the flow F2 of the sample gas mixture 2 by flow resistance 17. An optimized ratio between these flows can be found and is dependent on the pressure P inside the measuring chamber 3 and the produced ozone level. Measurements have shown that the flow F1 to ozonizer 4 should be about half of sample flow F2 for the conditions in this invention. The ozone generator can be of any known or new type, but a generator based on a so-called silent discharge was found to be well suited because of its adequate ozone production and small size. Dry air or even pure oxygen can be used as input to the generator but the described method using dried ambient air is by far the most simple.

Above has been described how a small and inexpensive but still very sensitive NO-analyzer can be constructed. To those skilled in the art it is obvious that also other embodiments and uses applying the presented basic ideas are possible.

## Claims

1. A chemiluminescent gas analyzer for determining a concentration of a gaseous component (G1) in a sample gas mixture (2), comprising:
- a measuring chamber (3) defined by a reflective inner surface (27) of a housing wall (33) and by a transparent window (22);
- input conduits (24, 23) for delivering a gaseous reagent (G2) and said gas mixture into said chamber, and an outlet (18) for removing said gases and possible chemical compounds thereof;
- at least a radiation sensitive detector (7) directed to said window and said chamber and receiving radiation (E) emitted as a consequence of a reaction between the gaseous component and the gaseous reagent, **characterized in that** further in said analyzer:
- a substantial height portion (H1-H3) of the reflective inner surface (27) is composed of at least one convergent surface section (27a and/or 27e and/or 27b and/or 27c) tapering towards a bottom (35) of said chamber;
- said input conduits (23, 24) have at least one orifice (26a, 26b; 26c) within a bottom end region (45) of said chamber opposite to said window, said bottom end region being within the height portion (H1-H3) for said convergent surface section(s); and
- there is a pressure (P) of at least 0.2 bar within the measuring chamber (3) during radiation detection by said detector (7).

2. A chemiluminescent gas analyzer according to claim 1, **characterized in that** said convergent surface sections are a part of a sphere (27a), or a part of an ellipsoid (27b), or a part of a paraboloid (27e); or a truncated cone (27c), said window (22) cropping said inner surface as a segment; and that said reflective inner surface (27) has at least a concavity (Φ) of said reflective inner surface (27) respective to a ratio (A3/A4) between an area (A3) of said reflective inner surface and an inside area (A4) of a hypothetical closed cylindrical surface with equal volumes and window areas being at maximum 0.94, or at maximum 0.9.

3. A gas chemiluminescent analyzer according to claim 1, **characterized in that** the radiation sensitive detector (7) is a photomultiplier tube (PMT), or a solid state sensor being a photo-charge-mode device (PCD), or an avalanche photodiode/transistor device (APD); and that said detector has an area (A2) approaching that (A1) of the transparent window (22).

4. A chemiluminescent gas analyzer according to claim 1 or 2, **characterized in that** the orifices (26a, 26b) are side by side or coaxial within said bottom end region for simultaneous delivery of said gaseous reagent and said sample gas mixture; or that the analyzer further comprises a flow selection unit (40) to successive delivery of said gaseous reagent and said sample gas mixture through a single orifice (26c).

5. A chemiluminescent gas analyzer according to claim 1 or 2, **characterized in that** a distance (H2) between the window (22) and the orifices (26a, 26b; 26c) constitutes a substantial part of the total height (H1) of said chamber; and that said distance (H2) is at least 50%, or at least 80% of the height (H1) of said chamber, or approaching the height (H1) of said chamber.

6. A chemiluminescent gas analyzer according to claim 1, **characterized in that** the pressure (P) within the measuring chamber (3) is at least 0.3 bar, or at least 0.4 bar, and at maximum 0.9 bar, or at maximum 0.7 bar; and that the measuring chamber (3) has a volume (V) smaller than 10 cm³, or between 5 cm³ and 1.2 cm³.

7. A chemiluminescent gas analyzer according to claim 1, **characterized in that** said outlet (18) has an opening (28) within said bottom end region opposite to said window; and that said outlet opening surrounds the orifice(s) (26a, 26b; 26c), or is side by side with the orifice(s) (26a, 26b; 26c), or is behind the orifice(s) (26a, 26b; 26c).

8. A chemiluminescent gas analyzer according to any of claims 1 to 7, **characterized in that** said bottom end region has an area (A5) substantially smaller than the area (A1 or A2) of the window or the detector and a bottom height (H1-H2) at maximum equal with said height portion (H1-H3), whereupon said at least one orifice is within the height portion of said convergent surface section(s).

9. A chemiluminescent gas analyzer according to claim 8, **characterized in that** that said area (A5) of the bottom end region is smaller than 50% of the area (A1 or A2) of the window or the detector, and said bottom height (H1-H2) is smaller than the height portion (H1-H3).

10. A chemiluminescent gas analyzer according to any of claims 1 to 8, **characterized in that** said convergent surface section(s) (27a, 27e, 27b, 27c) form the height portion (H1-H3) that is at least 50% of the total height (H1) of the measuring chamber (3).

11. A chemiluminescent gas analyzer according to claim 1, **characterized in that** said analyzer further comprises light trap tubes (19) in said input conduits (24, 23), and a light trap tube (20) connected to said outlet (18); and that said light trap tubes has a form of a helical coil, or a spiral, or successive bends.

12. A chemiluminescent gas analyzer according to claim 1, **characterized in that** said analyzer further comprises an optical filter (22, 32) between the measuring chamber (3) and said radiation sensitive detector (7); and that said filter is constituted by said window (22).

13. A chemiluminescent gas analyzer according to claim 1, **characterized in that** it further comprises a first hygroscopic ion exchange tube (10) in the input conduit (23) for said gas mixture (2), and a second hygroscopic ion exchange tube (14) in the feeding conduit (34) for the gaseous reagent (G2); and that the outlet (18) from said measuring chamber is in counter flow (F1, F2 ⇔ F3) communication with exhaust sides (39) of the first and second ion exchange tubes (10, 14).

14. A chemiluminescent gas analyzer according to claim 13, **characterized in that** it further comprises a third hygroscopic ion exchange tube (11) in series with and in flow direction (F2) prior to said first hygroscopic ion exchange tube (10) for predemoisturizing of said gas mixture.

15. A chemiluminescent gas analyzer according to any of claims 1 to 14 for determining concentration of nitric oxide in the sample gas, **characterized in that** it further comprises an ozone (O₃) generator (4) in a feeding conduit (34) for the gaseous reagent (G2) between a second hygroscopic ion exchange tube (14) and the input conduit (24).

16. A chemiluminescent gas analyzer according to any of claims 1 to 15 for determining concentration of nitric oxide in the sample gas, **characterized in that** it further comprises an infrared analyzer (30) connected in series with and in flow direction (F2) prior to the chemiluminescent gas analyzer (1) for determining the concentration of those gas components in the gas mixture (2) quenching the chemiluminescent reaction between nitric oxide (NO) and the ozone (O₃).

17. A method for determining a concentration of a gaseous component (G1) in a sample gas mixture (2), the method comprising the steps:
- allowing gaseous reagent (G2) and said gas mixture to stream into a measuring chamber (3) and mix with each other under a pressure (P) lower than the standard atmospheric pressure;
- detecting an intensity of radiation emitted as a consequence of a reaction between the gaseous component and the gaseous reagent;
- removing said gases and possible chemical compounds thereof from said chamber, **characterized in that** said method further comprises the steps:
- streaming the gaseous component and the gaseous reagent into said chamber at a bottom end region (45) far off from an active area (A2) of said detecting;
- maintaining the pressure (P) higher than 0.2 bar within said measuring chamber (3); and
- collecting said radiation for detection so that a substantial portion of that emitted radiation not directly hitting the active area of detecting is allowed to reflect once only before hitting said active area.

18. A method according to claim 17, **characterized in that** the sample gas mixture (2) is a breathing gas to or from a patient; and that said gaseous component (G1) is nitric oxide (NO) and said gaseous reagent (G2) is ozone (O₃).

19. A method according to claim 18, **characterized in that** air (13) for generating said ozone (O₃) and the breathing gas (2) are demoisturized by means of a counter flow (F1, F2 ⇔ F3) hygroscopic ion exchange in respect to gases removed from the measuring chamber (3) prior to feeding into an ozonizer and feeding into measuring chamber respectively.

20. A method according to claim 18, **characterized in that** the breathing gas (2) is further predemoisturized by means of a hygroscopic ion exchange in respect to ambient air.

21. A method according claim 18 or 20, **characterized in that** contents of nitrous oxide (N₂O) and anesthetic agents in the breathing gas (2) are determined by analysis utilizing absorption of infrared radiation; and that the concentration of nitric oxide (NO) detected from said chemiluminescent reaction is corrected with calculations having at least said contents of nitrous oxide and anesthetic agents as a data.

22. A method according to any of claims 18 to 21, **characterized in that** a portion of the radiation having wavelengths below 620 nm is cut off prior to said detection by an optical long pass filter (22) constituting a window for said chamber.
